# EUROPÄISCHE PATENTSCHRIFT

(11) **EP 1 258 668 B1**
(45) Veröffentlichungstag und Bekanntmachung des Hinweises auf die Patenterteilung: **27.12.2006**
(21) Anmeldenummer: 02008473.7
(22) Anmeldetag: 15.04.2002
(51) Int. Cl.: F16P 7/00

(54) **Aufnahmevorrichtung für ein Bearbeitungsaggregat an einer programmgesteuerten Maschine**
Mounting device for a processing tool in a program-controlled machine
Dispositif de montage pour un outillage sur une machine commandée par programme

(30) Priorität: 19.05.2001 DE 10124716
(43) Veröffentlichungstag der Anmeldung: 20.11.2002
(73) Patentinhaber: IMA Klessmann GmbH Holzbearbeitungssysteme, 32312 Lübbecke (DE)
(72) Erfinder: Rose, Martin, Ing., 32339 Espelkamp (DE); Bierenriede, Hartmut, 32351 Stemwede (DE)
(74) Vertreter: Elbertzhagen, Otto

(56) Entgegenhaltungen:
- DE-A- 2 549 414
- DE-A- 3 625 676
- DE-A- 4 417 625
- DE-A- 19 637 954
- DE-A- 19 834 333
- GB-A- 2 334 226
- HAFERKORN W.; FINGBERG W.: 'Kollisionsschutz an Werkzeugmaschinen' WERKSTATT UND BETRIEB Bd. 115, Nr. 9, 1982, Seiten 575 - 577

## Beschreibung

Die Erfindung bezieht sich auf eine Aufnahmevorrichtung für ein Bearbeitungsaggregat der im Gattungsbegriff des Patentanspruchs 1 näher bezeichneten Art.

Bei dem genannten Bearbeitungsaggregat kann es sich um ein Fräs- oder Bohraggregat handeln, mit dem eine spannehmende Bearbeitung an dem betreffenden Werkstück auf dem Bearbeitungsplatz der Maschine vorgenommen wird. Ebenso kann das Bearbeitungsaggregat ein Kantenanleimaggregat sein, welches eine Andruckrolle aufweist, mit der ein Kantenstreifen an Werkstückschmalflächenseiten angefahren wird. In all diesen Fällen fährt das Bearbeitungsaggregat entsprechend der Vorgabe durch das Maschinensteuerprogramm eine Bahnlinie oder Bahnkurve ab, wobei durch das betreffende kraftübertragende Bauteil und über den Aggregatträger eine berechenbare Vorschubkraft auf das Bearbeitungsaggregat übertragen werden muß. Es können Störfälle auftreten, bei denen eine erhöhte Vorschubkraft auf das Bearbeitungsaggregat ausgeübt wird, weil das Bearbeitungsaggregat nicht die programmierte Bahnlinie oder Bahnkurve abfährt oder auf ein Hindernis aufläuft. Das kommt vor allem dann vor, wenn das zu bearbeitende Werkstück auf dem Bearbeitungsplatz durch die Spannvorrichtung nicht einwandfrei fixiert ist und verschoben wird. Vor allem bei plattenförmigen Werkstücken, wie sie im Möbelbau zum Einsatz kommen und die aus einem holzartigen Werkstoff bestehen, verwendet man Saugspanner zur Fixierung der Werkstücke, die durch Leckagen gestört sein können. Solche Leckagen treten bei Werkstücken auf, deren Aufspannfläche sich, wie bei Holzwerkstoffen leicht möglich, verzogen hat oder die eine gewisse Porösität aufweist. Bei derartigen Fehlern passiert es immer wieder, daß Ausschuß produziert wird oder an dem Bearbeitungsaggregat etwas zu Bruch geht.

Grundsätzlich ist es bekannt, an Werkzeugmaschinen einen Kollisionsschutz vorzusehen. Dazu ist in der DE-Z "Werkstatt und Betrieb 115 (1982), S. 575 - 577; Kollisionsschutz an Werkzeugmaschinen" eine mechanisch arbeitende Einrichtung beschrieben, die eine Kugelrollmutter aufweist, welche auf einer angetriebenen Kugelrollspindel angeordnet ist. Die Kugelrollmutter kann sich überlagert dem Drehantrieb relativ zur Kugelrollspindel gegen die Kraft von Federelementen in axialer Richtung verschieben. Diese Einrichtung ist vorgesehen, um mittels der Kugelrollmutter einen Maschinenschlitten eines Bearbeitungszentrums zu verfahren, der einen Maschinenständer mit einem daran angeordneten, eine Arbeitsspindel aufnehmenden Spindelkasten trägt. Wird im Kollisionsfalle die Kugelrollmutter über einen bestimmten Weg relativ zur Kugelrollspindel verschoben, wird über einen die Kugelrollmutter abtastenden Endschalter der Vorschubantrieb für den Maschinenschlitten stillgesetzt. Bei der bekannten Einrichtung ist die Kollisionsschutz-Vorrichtung nicht nahe der Arbeitsspindel angeordnet, weswegen die bei einer Kollision der Arbeitsspindel auftretenden Kräfte bis hin zur Kugelrollmutter über einen längeren Weg übertragen werden müssen.

Aus dem Dokument DE 36 25 676 A1 ist ein Axial-Überlastelement bekannt, welches eine auf Zug oder Druck beaufschlagbare Stange aufweist, die in einem Gehäuse gegen die Kraft von Federn verschieblich angeordnet ist. Dieses Überlastelement ist für die Einfügung in Antriebsglieder von beweglichen Bauteilen einer Vorrichtung oder einer Maschine vorgesehen. Die Verschiebung der Stange über einen Grenzwert hinaus wird mittels eines Endschalters erfaßt, über den der jeweilige Antrieb stillgesetzt wird. Ein solches Überlastelement ist für sich allein nicht zur Aufnahme eines Bearbeitungsaggregates an einer Werkzeugmaschine geeignet.

Die Offenlegungsschrift DE 198 34 333 A1 beschreibt ebenfalls eine Kollisionsschutzvorrichtung, die zwischen einem antreibenden Maschinenbauteil und einem zu bewegenden Werkzeug, wie einer Spritz- oder Lackierdüse, angeordnet ist. Bei dieser bekannten Vorrichtung kommt es auf eine Verwendung in einer explosionsgefährdeten Umgebung an, woran eine Sensorvorrichtung angepaßt ist, die sich zwischen dem Antriebsbauteil und dem zu bewegenden Werkzeug befindet. Die Sensorvorrichtung weist eine Kammer auf, deren Volumen sich bei einer Relativverschiebung zwischen dem Antriebsbauteil und dem zu bewegenden Werkzeug verändert, womit die dadurch bedingte Druckänderung eines in der Kammer befindlichen Gaspolsters zwecks Ermittlung des Weges der Relativverschiebung erfaßt werden kann.

Die Erfindung geht gemäß dem Oberbegriff des Anspruchs 1 von einer Aufnahmevorrichtung für ein Bearbeitungsaggregat an einer programmgesteuerten Maschine aus, wie sie aus dem Dokument DE 196 37 954 A1 bekannt ist. Eine solche Aufnahmevorrichtung weist einen Aggregatträger in Gestalt eines Supports auf, der zumindest parallel zu einer Bearbeitungsebene, also in Richtung zweier senkrecht aufeinanderstehender Maschinenachsen, verfahrbar ist. Aus dem Dokument GB 2 334 226 A ist es bekannt, bei einer Aufnahmevorrichtung dieser Art eine Überlastung am Aggregatträger mittels eines Sensors zu erfassen, der auf eine Verformung des Aggregatträgers anspricht. Zeigt der Sensor eine Überlastung an, wird die Maschine stillgesetzt.

Der Erfindung liegt die Aufgabe zugrunde, eine Aufnahmevorrichtung der vorgenannten Art zu schaffen, bei der ein unprogrammgemäßes Auflaufen des Bearbeitungsaggregates oder des darin eingespannten werkzeugs auf ein Hindernis in seitlicher, radialer Richtung bezogen auf die Achsrichtung des Bearbeitungsaggregates zwecks Vermeidung von Beschädigungen mit hoher Zuverlässigkeit erfaßt wird.

Diese Aufgabe wird mit einer die Merkmale des Patentanspruchs 1 aufweisenden Aufnahmevorrichtung gelöst.

Für die Erfindung ist wesentlich, daß man dem Federelement zwischen der Schwenkplatte und dem kraftübertragenden Bauteil eine solche Vorspannung geben kann, die der Nenn-Vorschubkraft des jeweiligen Bearbeitungswerkzeuges am Bearbeitungsaggregat entspricht. So erfolgt die Auslenkung des Bearbeitungsaggregates unter Überwindung der vorbestimmten Federkraft nur dann, wenn die Nenn-Vorschubkraft überstiegen wird, was zur sofortigen Abschaltung des Vorschubs des Bearbeitungsaggregates führt. Entsprechend der Nenn-Vorschubkraft kann die Federkennlinie des Federelementes vorgegeben werden, dies kann entweder durch Vorspannung einer mechanischen Feder oder eines Luftpolsters in einem Pneumatikzylinder bewirkt werden.

Vorteilhafte Ausgestaltungsmerkmale der Erfindung ergeben sich aus den Unteransprüchen.

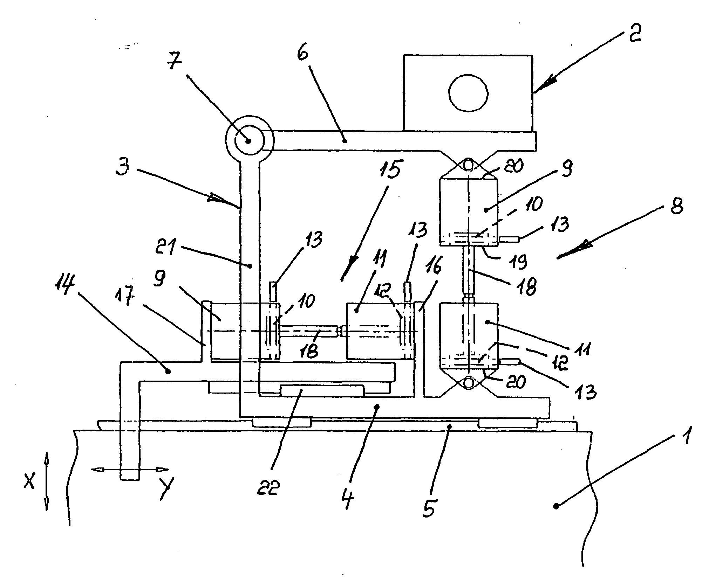

Die Erfindung wird nachfolgend anhand der Zeichnung an einem Ausführungsbeispiel noch näher erläutert. Die Zeichnung zeigt schematisch die Draufsicht auf eine Aufnahmevorrichtung für ein Bearbeitungsaggregat einer programmgesteuerten Maschine, das in Richtung zweier Maschinenachsen zumindest, der X-Achse und der Y-Achse, verfahrbar ist.

Im einzelnen zeigt die Zeichnung einen Maschinensupport 1, der in Richtung der X-Achse der Maschine verfahrbar ist. An dem Support 1 ist ein Bearbeitungsaggregat 2 angeordnet, welches mit dem Support 1 über einen Aggregatträger 3 verbunden ist. Der Aggregatträger 3 hat eine Grundplatte 4, die über eine Geradführung 5 am Support 1 verfahrbar angeordnet ist, und zwar in Richtung der Y-Achse der Maschine, die senkrecht auf der X-Achse steht. An der Grundplatte 5 steht senkrecht ein Tragarm 21 vor, an dem eine Schwenkplatte 6 gelagert ist, auf der in der üblichen Betriebslage die X-Achse der Maschine lotrecht steht. Die zugehörige Schwenkachse 7 am Ende des Tragarms 21 steht senkrecht auf der X-Y-Ebene der beiden Maschinenachsen, dies ist die übliche Z-Richtung bei einer programmgesteuerten Werkzeugmaschine. In Abstand von der Schwenkachse 7 ist an der Schwenkplatte 6 das Bearbeitungsaggregat 2 angeordnet, das sich auf derjenigen Seite der Schwenkplatte 6 befindet, die von der Grundplatte 4 des Aggregatträgers 3 abgewandt ist.

Zwischen der der Grundplatte 4 des Aggregatträgers 3 zugewandten Seite der Schwenkplatte 6 und der Grundplatte 4 ist ein erstes Federelement 8 angeordnet, welches gelenkig sowohl mit der Grundplatte 4 als auch mit der Schwenkplatte 6 verbunden ist. Die Elastizität des Federelementes 8 ist nur dann wirksam, wenn das Bearbeitungsaggregat 2 über die Schwenkplatte 6 auf das Federelement 8 solche Kräfte ausübt, die über eine voreingestellte Vorschubkraft, die Nenn-Vorschubkraft, hinausgeht. Dies kann in beiden Richtungen der X-Achse der Fall sein, entweder wird das Federelement 8 in Richtung seiner Verlängerung ausgelenkt, oder es wird zusammengedrückt.

Das Federelement 8 besteht dazu aus einem ersten Pneumatikzylinder 9 mit einem Kolben 10 und aus einem zweiten Pneumatikzylinder 11 mit einem Kolben 12. Die beiden Kolben 10 und 12 der beiden Zylinder 9, 11 sind mittels einer Kolbenstange 18 fest miteinander verbunden. In beiden Zylindern 9, 11 wird ein solcher Luftdruck aufgebaut, der es bis zum Erreichen der Nenn-Vorschubkraft verhindert, daß das Federelement 8 ausgelenkt wird. Hierbei liegt der Kolben 10 des ersten Zylinders 9 am Zylinderboden 19 und der Kolben 12 des zweiten Zylinders 11 am Zylinderkopf 20 an. Der Zylinderkopf 20 des zweiten Zylinders 11 liegt zur Grundplatte 4 des Aggregatträgers 3 hin, ebenso ist der Zylinderkopf 20 des ersten Zylinders 9 zur Schwenkplatte 6 hin angeordnet. Wird nun durch eine die Nenn-Vorschubkraft übersteigende Vorschubkraft über das Bearbeitungsaggregat 2 die Schwenkplatte 6 aus ihrer normalen Betriebslage heraus verschwenkt, wodurch im einen Fall das Federelement 8 zusammengedrückt wird, dann entfernt sich der Kolben 10 im ersten Zylinder 9 vom Zylinderboden 19. Tritt der umgekehrte Fall auf, daß die Schwenkplatte 6 von der Grundplatte 4 weg verschwenkt wird, dann dehnt sich das Federelement 8 und es verschiebt sich der Kolben 12 im zweiten Zylinder 11. Dies geschieht jeweils gegen das in den Zylindern 9, 11 aufgebaute Luftpolster.

Die Verschiebung der Kolben 10 und 12 in den beiden Pneumatikzylindern 9 und 11 wird durch Sensoren 13 detektiert, die an den beiden Zylindern 9, 11 angeordnet sind. Im Störfalle spricht einer der beiden Sensoren 13 an, wodurch ein Signal ausgelöst wird, welches den auf das Bearbeitungsaggregat 2 ausgeübten Vorschub sofort blockiert.

Das Bearbeitungsaggregat ist, wie vorstehend geschildert, in Richtung der X-Achse der Maschine tastend aufgehängt. Ebenso kann eine Tastung des Bearbeitungsaggregates 2 auch in der Y-Achse vorgesehen sein. Das Verfahren des Bearbeitungsaggregates 2 in der Y-Achse erfolgt über die Geradführung 5, entlang der der Aggregatträger 3 verschieblich ist. So bilden der Aggregatträger 3 und der Support 1 einen Kreuzsupport. Die für das Verfahren des Aggregatträgers 3 in der Y-Achse erforderliche Vorschubkraft wird jedoch nicht unmittelbar auf die Grundplatte 4 des Aggregatträgers 3 übertragen sondern mittelbar über ein Bauteil 14, das in der Y-Achse eine solche kraftübertragende Funktion übernimmt, wie es bei dem Support 1 in der X-Achse der Fall ist. Das Bauteil 14 ist gegenüber der Grundplatte 4 des Aggregateträgers 3 verschieblich, dazu gibt es eine weitere Geradführung 22, nämlich zwischen dem Bauteil 14 und der Grundplatte 4 des Aggregatträgers 3, und diese Geradführung 22 ist mit der Geradführung 5 parallel.

Zwischen der Grundplatte 4 des Aggregatträgers 3 und dem Bauteil 14 ist ebenfalls ein Federelement 15 angeordnet, und zwar zwischen einer Konsole 16 an der Grundplatte 4 und einer Konsole 17 an dem kraftübertragenden Bauteil 14. Das Federelement 15 ist in gleicher Weise wie das Federelement 8 aufgebaut und besteht so auch hier aus einem ersten Pneumatikzylinder 9 und einem zweiten Pneumatikzylinder 11, wobei die im Störfalle auftretende Verschiebung der Kolben 10 und 12 beider Zylinder 9, 11 auch hier durch zwei Sensoren 13 des Federelementes 15 überwacht wird. Das gesamte Federelement 15 liegt in Richtung der Y-Achse, und da zwischen dem kraftübertragenden Bauteil 14 und der Grundplatte 4 des Aggregatträgers 3 nur eine Linearverschiebung möglich ist, erübrigt es sich, anders als beim Federelement 8, an den Konsolen 16 und 17 eine gelenkige Abstützung vorzusehen.

Das linear auslenkbare Federelement 15 kann je nach den verfügbaren Platzverhältnissen auch anstelle des Federelementes 8 vorgesehen werden, wenn man es beispielsweise mit einem Kreuzsupport zu tun hat, dessen beide Schlitten in unterschiedlichen Ebenen linear verfahrbar sind.

## Patentansprüche

1. Aufnahmevorrichtung für ein Bearbeitungsaggregat (2) an einer programmgesteuerten Maschine zur Bearbeitung von an einem Bearbeitungsplatz aufgespannten Werkstücken, insbesondere von plattenförmigen Werkstücken für den Möbel- und Innenausbau, mit einem Aggregatträger (3), an dem im montierten Zustand der Vorrichtung ein die Vorschubkraft für das Verfahren des Bearbeitungsaggregates (2) in zumindest einer der Maschinenachsen übertragendes Bauteil (1) angreift,
**dadurch gekennzeichnet,**
**daß** der Aggregatträger (3) eine Schwenkplatte (6) aufweist, auf der die Wirkrichtung des kraftübertragenden Bauteils (1) entsprechend der betreffenden Maschinenachse (X) lotrecht steht und deren Schwenkachse (7) senkrecht zu dieser Wirkrichtung angeordnet ist und daß an der Schwenkplatte (6) das Bearbeitungsaggregat (2) in Abstand von der Schwenkachse (7) und zwischen der Schwenkplatte (6) und dem kraftübertragenden Bauteil (1) ein in beide Vorschubrichtungen der Maschinenachse (X) auslenkbares Federelement (8) angeordnet ist, welches als Drehmomentstütze in Abstand von der Schwenkachse (7) an der Schwenkplatte (6) angelenkt ist, welches ferner entgegen seiner Federkraft zumindest beim Übersteigen einer vorbestimmten Vorschubkraft ausgelenkt wird und an welchem sich wenigstens ein auf seine Auslenkung ansprechender Sensor (13) befindet, der im Falle seines Ansprechens ein die Stillsetzung des Aggregatvorschubs steuerndes Signal erzeugt.

2. Aufnahmevorrichtung nach Anspruch 1,
**dadurch gekennzeichnet,**
**daß** der Aggregatträger (3) im montierten Zustand der Vorrichtung auf einer Führung (5) verschieblich angeordnet ist, die in der Wirkrichtung eines zweiten kraftübertragenden Bauteils (14) entsprechend einer zweiten Maschinenachse (Y) liegt, wobei diese Maschinenachse (Y) senkrecht zu der ersten Maschinenachse (X) steht und der Aggregatträger (3) in Richtung der Führung (5) mit einem weiteren Federelement (15) an dem kraftübertragenden Bauteil (14) als auch über die Schwenkplatte (6) mittels des hieran angreifenden Federelementes (8) an dem in Richtung der Maschinenachse (X) kraftübertragenden Bauteil (1) abgestützt ist.

3. Aufnahmevorrichtung nach Anspruch 1 oder 2,
**dadurch gekennzeichnet,**
**daß** das jeweilige Federelement (8, 15) aus wenigstens einem Pneumatikzylinder (9, 11) besteht, in dem die Federkraft durch entsprechend der Soll-Vorschubkraft vorgespannte Luftpolster erzeugt ist, und der Sensor (13) auf die Verschiebung des wenigstens einen Kolbens (10, 12) in diesem Zylinder (9, 11) anspricht.

4. Aufnahmevorrichtung nach Anspruch 3,
**dadurch gekennzeichnet,**
**daß** das jeweilige Federelement (8, 15) aus zwei miteinander koaxialen Zylindern (9, 11) besteht, deren Kolben (10, 12) mittels einer Kolbenstange (18) fest miteinander verbunden sind, wobei in der nicht ausgelenkten Position der Kolben (10) im ersten Zylinder (9) am Zylinderboden (19) und der Kolben (12) im zweiten Zylinder (11) am Zylinderkopf (20) anschlägt, und daß jedem der beiden Kolben (10, 12) ein Sensor (13) zugeordnet ist.

## Claims

1. Mounting device for a processing tool (2) in a program-controlled machine for processing workpieces, more particularly panel-type workpieces for furniture and interior fittings, clamped on a processing station, with a tool support (3) on which in the assembled state of the device a structural part (1) engages which transfers the feed force for moving the processing tool (2) in at least one of the machine axes,
**characterised in that**
the tool support (3) has a pivotal plate (6) on which the active direction of the force-transferring structural part (1) stands perpendicular corresponding to the relevant machine axis (X) and whose pivotal axis (7) is arranged perpendicular to this active direction and that the processing tool (2) is disposed on the pivotal plate (6) at a distance from the pivotal axis (7) and between the pivotal plate (6) and the force-transferring structural part (1) there is a spring element (8) which can be deflected in both feed directions of the machine axis (X), which is attached for articulation as torque support to the pivotal plate (6) at a distance from the pivotal axis (7), which furthermore is deflected against its spring force at least on exceeding a predetermined feed force and on which is located at least one sensor (13) which responds to the deflection and which in the event of responding generates a signal which controls the stopping of the tool feed.

2. Mounting device according to claim 1,
**characterised in that**
the tool support (3) in the assembled state of the device is mounted displaceable on a guide (5) which lies in the active direction of a second force-transferring structural part (14) corresponding to a second machine axis (Y) wherein this machine axis (Y) is perpendicular to the first machine axis (X) and the tool support (3) is supported in the direction of the guide (5) with a further spring element (15) on the force-transferring structural part (14) and also through the pivotal plate (6) by means of the spring element (8) engaging on same on the structural part (1) which transfers force in the direction of the machine axis (X).

3. Mounting device according to claim 1 or 2,
**characterised in that**
the relevant spring element (8, 15) consists of at least one pneumatic cylinder (9, 11) in which the spring force is produced through air cushions pretensioned corresponding to the ideal feed force, and the sensor (13) responds to the displacement of the at least one piston (10, 12) in this cylinder (9,11).

4. Mounting device according to claim 3,
**characterised in that**
the relevant spring element (8,15) consists of two cylinders (9,11) coaxial with one another whose pistons (10, 12) are connected fixed to one another by means of a piston rod (18) wherein in the non-deflected position the piston (10) in the first cylinder (9) stops against the cylinder base (19) and the piston (12) in the second cylinder (11) stops against the cylinder head (20), and that each of the two pistons (10, 12) is assigned a sensor (13).

## Revendications

1. Dispositif de montage pour un outillage de traitement (2) sur une machine commandée par programme pour le traitement de pièces fixées dans un poste de traitement, notamment de pièces en forme de panneaux pour la fabrication de meubles et pour l'aménagement intérieur, avec un porte-outillage (3) qui, lorsque le dispositif est à l'état monté, est attaqué par un élément (1) qui transmet la force d'avance pour le déplacement de l'outillage de traitement (2) dans au moins l'un des axes de la machine,
**caractérisé en ce que**
le porte-outillage (3) présente une plaque pivotante (6) par rapport à laquelle la direction d'action de l'élément transmetteur de force (1), correspondant à l'axe (X) concerné de la machine, est perpendiculaire, et dont l'axe (7) est orienté perpendiculairement à cette direction d'action, et **en ce que**, sur la plaque pivotante (6), est agencé l'outillage de traitement (2) à distance de l'axe de pivotement (7), et qu'entre ladite plaque pivotante (6) et l'élément transmetteur de force (1) est agencé un élément élastique (8) déformable dans les deux directions d'avance de l'axe (X) de la machine, lequel élément est monté articulé sur la plaque pivotante (6), en tant qu'organe d'appui à l'encontre du couple de rotation, à distance de l'axe de pivotement (7) et est, en outre, déformable au-delà de sa force élastique au moins lorsqu'une force d'avance prédéterminée est dépassée, et sur lequel se trouve au moins un capteur (13) qui réagit à ses déformations, et qui, en cas de réaction, génère un signal qui commande l'arrêt de l'outillage.

2. Dispositif de montage selon la revendication 1,
**caractérisé en ce que**
le porte-outillage (3), lorsque le dispositif est à l'état monté, est agencé, mobile, sur un dispositif de guidage (5) qui se trouve dans la direction effective d'un deuxième élément transmetteur de force (14), conformément à un deuxième axe (Y) de la machine, ledit axe (Y) de la machine étant orienté perpendiculairement au premier axe (X) de la machine, et le porte-outillage (3) prenant appui dans la direction du dispositif de guidage (5), contre l'élément transmetteur de force (14), avec un autre élément élastique (15), ainsi que contre l'élément transmetteur de force (1) dans la direction de l'axe (X) de la machine, par l'intermédiaire de la plaque pivotante (6), au moyen de l'élément élastique (8) entrant ici en prise.

3. Dispositif de montage selon la 1 ou 2,
**caractérisé en ce que**
chaque élément élastique (8, 15) consiste en au moins un cylindre pneumatique (9, 11) dans lequel la force élastique est générée par des coussins d'air précontraints conformément à la force d'avance de consigne, et **en ce que** le capteur (13) réagit au déplacement du piston (10, 12) au moins prévu dans ce cylindre (9, 11).

4. Dispositif de montage selon la revendication 3,
**caractérisé en ce que**
chaque élément élastique (8, 15) consiste en deux cylindres (9, 11) coaxiaux dont les pistons (10, 12) sont reliés fixement entre eux au moyen d'une tige de piston (18), le piston (10) butant, dans le cylindre (9) contre le fond de cylindre (19) et le piston (12), butant, dans le deuxième cylindre (11), contre la tête de cylindre (20), à l'état non déformé, et **en ce qu'**un capteur (13) est associé à chacun des deux pistons (10, 12).
